Europäisches Patentamt

European Patent Office

Office européen des brevets

(19)

(11) Veröffentlichungsnummer : **0 208 825 B2**

(12) **NEUE EUROPÄISCHE PATENTSCHRIFT**

(45) Veröffentlichungstag der neuen Patentschrift :
**02.01.92 Patentblatt 92/01**

(21) Anmeldenummer : **85890156.4**

(22) Anmeldetag : **16.07.85**

(51) Int. Cl.⁵ : **B62D 53/06,** B62D 61/12

(54) **Sattelzug.**

(43) Veröffentlichungstag der Anmeldung :
**21.01.87 Patentblatt 87/04**

(45) Bekanntmachung des Hinweises auf die
Patenterteilung :
**17.05.89 Patentblatt 89/20**

(45) Bekanntmachung des Hinweises auf die
Entscheidung über den Einspruch :
**02.01.92 Patentblatt 92/01**

(84) Benannte Vertragsstaaten :
**AT BE CH DE FR GB IT LI LU NL SE**

(56) Entgegenhaltungen :
**DE-A- 2 032 158
DE-U- 8 337 467
FR-A- 1 509 029
FR-A- 2 036 346
US-A- 2 553 959**

(56) Entgegenhaltungen :
**US-A- 3 254 903
US-A- 3 834 736
US-A- 3 838 885
US-A- 4 161 329**

(73) Patentinhaber : **Primetzhofer Stahl- und
Fahrzeugbau G.m.b.H. & Co. KG
Im Grenzwinkel 1
A-4060 Leonding (AT)**

(72) Erfinder : **Primetzhofer, Hermann
Im Bäckerfeld 7
A-4060 Leonding (AT)**
Erfinder : **Holzmann, Franz
Haid 10
A-4280 Königswiesen (AT)**

(74) Vertreter : **Hübscher, Gerhard, Dipl.-Ing. et al
Patentanwälte Dipl.-Ing. Gerhard Hübscher
Dipl.-Ing. Helmut Hübscher Dipl.-Ing. Heiner
Hübscher Spittelwiese 7
A-4020 Linz (AT)**

EP 0 208 825 B2

## Beschreibung

Die Erfindung bezieht sich auf einen Sattelzug aus Sattelzugmaschine und aufgesatteltem Sattelanhänger, deren Fahrgestelle miteinander durch eine Sattelkupplung verbunden und über eine Verriegelungsvorrichtung gegen ein Schwenken um eine Vertikalachse verriegelbar sind, wobei zum Zusammenziehen der Fahrgestelle aus einer Normalposition für straßenfahrt in eine verriegelbare, verkürzte Manövrierposition für Geländefahrt zumindest einer der Sattelkupplungsteile längsverschiebbar am zugehörigen Fahrgestell sitzt. Auf Grund der im Straßenverkehrswesen von den enzelnen Staaten festgelegten höchstzulässigen Achslasten und damit zusammenhängender Mindestradstände bestimmt die Nutzlast eines Sattelzuges gewissermaßen auch die Sattelzuglänge und eine Nutzlaststeigerung wirkt sich wohl oder übel auch in einer Verlängerung des Sattelzuges aus. Je länger aber ein solcher Sattelzug wird, um so unbeholfener ist er zu lenken, wobei diese Schwerfälligkeit vor allem die abseits der Straße im Gelände und auf der Baustelle wichtige Manövrierfähigkeit beeinträchtigt. Gemäß der US-A-2553959 wurde zwar bereits ein Sattelzug mit relativ zueinander längsverschiebbar angeordneten Sattelkupplungsteilen und einer Verriegelungsvorrichtung für die in eine verkürzte Manövrierposition zusammenschiebbaren Fahrgestelle vorgeschlagen, um die Geländetauglichkeit zu verbessern, doch muß hier der den verschiebbaren Kupplungsteil tragende Kupplungsschlitten durch ein Verfahren der Zugmaschine selbst bewegt werden, was, abgesehen von der Umständlichkeit, vor allem ein noch manövrierfähiges Fahrzeug voraussetzt. Die Manövrierposition läßt sich daher nicht dann einnehmen, wenn es die Bodenverhältnisse verlangen, sondern muß im voraus gewählt werden, so lange es noch gute Straßenverhältnisse gibt, bei denen aber wieder die Manövrierposition eine unerwünschte Beeinträchtigung des Fahrverhaltens mit sich bringt. Darüber hinaus kann durch die verkürzte und verriegelte Manövrierposition allein aber keine entscheidende Verbesserung der Geländegängigkeit erreicht werden. Aus dem DE-U-8337467 geht weiters ein Sattelzug als bekannt hervor, bei dem zur Erhöhung der Fahrsicherheit die Fahrgestelle von Zugmaschine und Anhänger gegen ein Relativverschwenken verriegelt werden können und die Hinterachse mit einer Lenkeinrichtung ausgestattet ist, wodurch ein Schleudern und Vorrutschen des Anhängers während eines Bremsvorganges oder auf glatter Fahrbahn verhindert und das Rückwärtsfahren erleichtert werden sollen. Auch durch diese in der Normalposition für Straßenfahrt vorgesehenen Maßnahmen für sich ist die Geländetauglichkeit, eines Sattelzuges nicht in befriedigendem Ausmaß zu verbessern.

Der Erfindung liegt daher die Aufgabe zugrunde, diese Mängel zu beseitigen und einen Sattelzug der eingangs geschilderten Art zu schaffen, der auf der Straße für hohe Nutzlasten geeignet ist und sich dennoch im Gelände und auf der Baustelle durch seine besondere Wendigkeit und Lenkbarkeit auszeichnet.

Die Erfindung löst diese Aufgabe dadurch, daß der Anhänger für seine Hinterachse eine in der Manövrierposition bei verriegelten Fahrgestellen betätigbare Lenkeinrichtung aufweist, wobei der vorzugsweise dem Anhänger zugehörende verschiebbare Kupplungsteil auf einem über einen Stelltrieb bewegbaren Kupplungsschlitten angeordnet ist. Bei ungünstigen Bodenverhältnissen ist es so jederzeit möglich, die Fahrgestelle über den Stelltrieb zusammenzuziehen und dann zu verriegeln, wodurch ein vergleichsweise kompaktes Fahrzeug entsteht, das durch die zusätzliche, nach dem Verriegeln der Fahrgestelle betätigbare Hinterachslenkung auch im Gelände überraschend wendig ist. Durch die Betätigung des Kupplungsschlittens mittels eines eigenen Stelltriebes ist ein vorzeitiger Übergang von der Normalposition in eine Manövrierposition unnötig und es besteht nie die Gefahr einer zu späten Wahl der Manövrierposition. Da sich außerdem zusammen mit den Kupplungsteilen auch die Fahrgestelle über den Stelltrieb gegeneinander längsverschieben lassen, ist es in extremen Situationen sogar möglich, den Stelltrieb als zusätzliche Antriebshilfe für den Sattelzug zu nützen. Ist der dem Anhänger zugehörige Kupplungsteil verschiebbar, beispielsweise der Königszapfen, bleiben durch ein solches Verschieben die Verhältnisse der Lastaufteilung auf Vorder- und Hinterachsen der Zugmaschine gleich, sie ändern sich Jedoch für den Sattelanhänger, dessen vorderer Abstützpunkt wandert, so daß es zu einer verstärkten Auflast für die Zugmaschine und dadurch auch zu einer verstärkten Belastung deren angetriebenen Hinterräder kommt. In der Manövrierposition ergibt sich daher ein gesteigertes Zugvermögen, das wiederum die Geländegängigkeit weiter verbessert.

Um bei gleichbleibender Wendigkeit für entsprechend hohe Nutzlasten geeignet zu sein, kann erfindungsgemäß der Anhänger als Hinterachse eine Doppelachse besitzen, von der die eine Achse lenkbar und die andere vorzugsweise entlastbar ist. Die Doppelachse erlaubt die gewünschte Nutzlaststeigerung, wobei sich in der Manövrierposition durch das Entlasten der einen Achse und das Lenken der anderen Achse praktisch das Lenkverhalten einer einfachen Hinterachse ergibt und die gewünschte Manövrierfähigkeit gewährleistet ist.

In der Zeichnung ist der Erfindungsgegenstand in einem Ausführungsbeispiel schematisch dargestellt, und zwar zeigen

Fig. 1 und 2 einen erfindungsgemäßen Sattelzug in Normalposition und Manövrierposition,
Fig. 3 und 4 Lenk stellungen der Normalposition und Manövrierposition in Draufsicht und

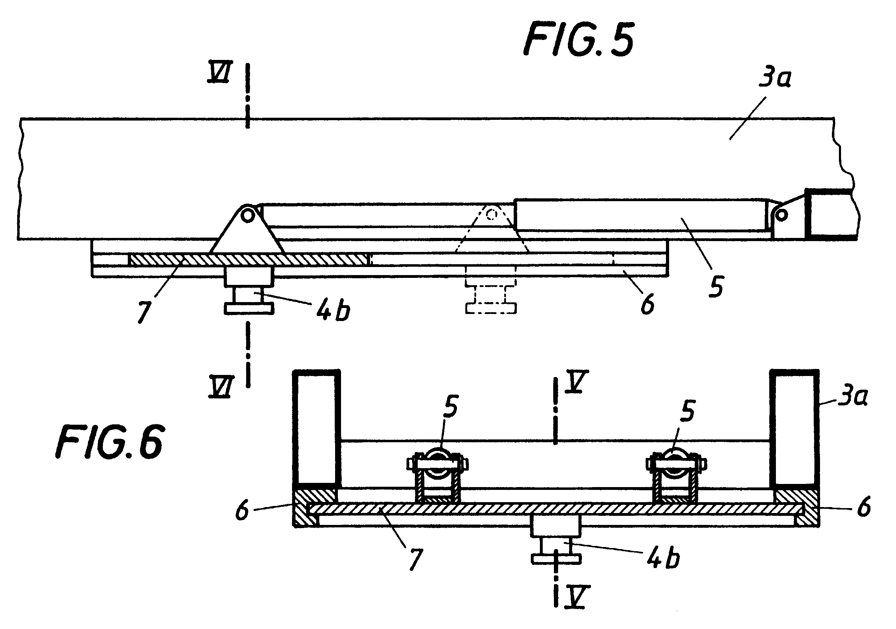

Fig. 5 und 6 den verschiebbaren Kupplungsteil der Sattelkupplung im Längs- und Querschnitt größeren Maßstabes.

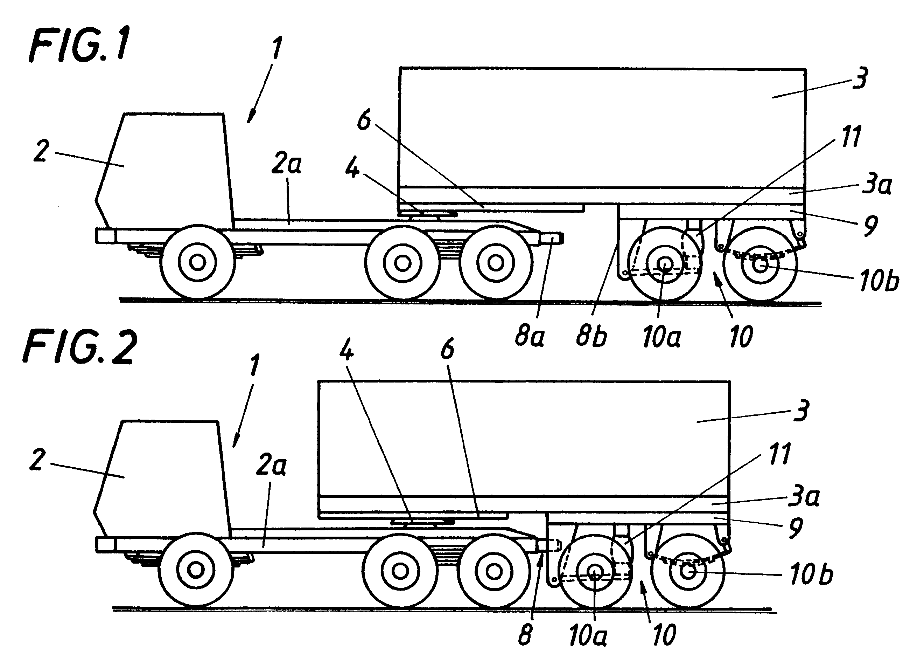

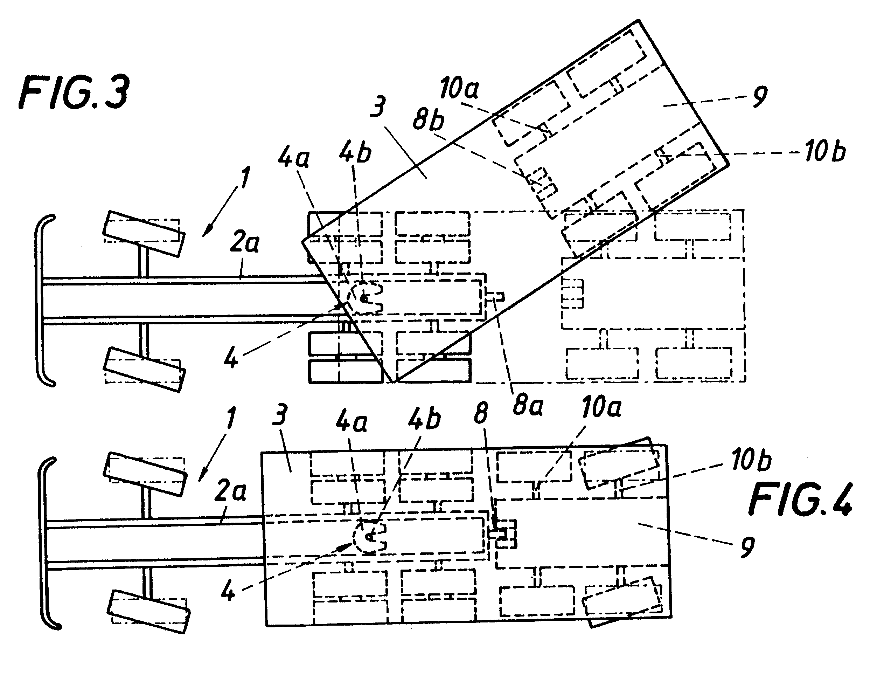

Ein Sattelzug 1 setzt sich aus einer dreiachsigen Sattelzugmaschine 2 und einem doppelachsigen Sattelanhänger 3 zusammen, wobei die Fahrgestelle 2a, 3a von Zugmaschine 2 und Anhänger 3 miteinander über eine Sattelkupplung 4 verbunden sind. Die Sattelkupplung 4 besteht aus einer der Zugmaschine 2 zugehörigen, am Fahr gestell 2a festgeschraubten Kupplungsplatte 4 und einem dem Anhänger 3 zugehörigen, am Fahrgestell 3a längsverschiebbar angeordneten Königszapfen 4b, der dazu auf einem über hydraulische Stelltriebe 5 entlang einer fahrgestellfesten Führung 6 bewegbaren Kupplungsschlitten 7 sitzt. Durch Verschieben des Königszapfens 4b lassen sich daher die Fahrgestelle 2a, 3a von Zug-Maschine 2 und Anhänger 3 zusammenziehen bzw. auseinanderdrücken und in eine auseinandergezogene Normalposition (Fig. 1 und 3) bzw. eine zusammengezogene Manövrierposition (Fig. 2 und 4) bringen. Eine Verriegelungsvorrichtung 8 erlaubt dabei das Verriegeln der beiden Fahrgestelle 2a, 3a in Manövrierposition, so daß sich in der Manövrierposition eine starre, gut lenkbare Fahrzeugeinheit ergibt. Die Verriegelungsvorrichtung 8 umfaßt einen am Heck des Fahrgestells 2a montierten Verriegelungsstempel 8a und einen vertikalen Verriegelungsschlitz 8b in der Hinterachskonsole 9 des Anhängerfahrgestells 3a. Ist der Verriegelungsstempel 8a in den Verriegelungsschlitz 8b eingedrungen, wird ein Verschwenken der Fahrgestelle 2a, 3a um eine Vertikalachse verhindert, Fahrtschwingungen od. dgl. können aber durchaus aufgenommen werden.

Das Fahrgestell 3a des Anhängers 3 ist mit einer Doppelachse 10 ausgestattet, von der die vordere Achse 10a über eine Luftfeder 11 an der Hinterachskonsole 9 abgestützt und dadurch auch entlastbar ist. Die hintere Achse 10b der Doppelachse 10 kann über eine nicht weiter dargestellte Lenkeinrichtung gelenkt werden, wobei die Lenkeinrichtung in Manövrierposition der Fahrgestelle 2a, 3a und bei entlasteter Achse 10a betätigt wird.

Der Sattelzug 1 ist für hohe Nutzlasten ausgelegt und paßt sich in Normalposition hinsichtlich Radtänden und Achslasten den jeweiligen gesetzlichen Vorschriften an. Es ergibt sich ein vergleichsweise langer Sattelzug 1, der nicht allzu wendig ist und lediglich ein für Straßenfahrt geeignetes Lenkverhalten zeigt (Fig. 3). Um daher trotz der hohen Nutzlasten die Wendigkeit auf der Baustelle zu verbessern, werden die Fahrgestelle 2a, 3a des Sattelzuges 1 durch Verschieben des Königszapfens 4b zusammengezogen und in Manövrierposition mittels der Verriegelungsvorrichtung 8 verriegelt. Dann wird die Lenkeinrichtung für die eine Hinterachse 10b freigegeben und die andere Hinterachse 10a entlastet, was vorteilhafterweise automatisch beim Verriegelungsvorgang erfolgt, und es ist ein einheitliches, gut lenkbares Fahrzeug für die Baustellenfahrt vorhanden (Fig. 4). Die Geländegägigkeit und Manövrierfähigkeit des Sattelzuges 1 wird in der Manövrierposition dadurch gesteigert, daß sich, bedingt durch das Verschieben des Königszapfens 4b relativ zum Anhängerfahrgestell 3a, der Anhängerschwerpunkt näher zur Sattelkupplung 4 hin verlagert und dem nach auch die Auflast der Zugmaschine 2 durch den Anhänger 3 vergrößert wird. Da sich aber der Angriffspunkt dieser Auflast am Fahrgestell 2a der Zugmaschine nicht verschiebt, bleibt die Lastaufteilung auf Vorder- und Hinterachsen der Zugmaschine gleich und es kommt, ohne die Lenkeigenschaften zu beeinträchtigen, zu einer stärkeren Belastung der Antriebsräder und damit zu einer Erhöhung der Zugkraft.

**Patentansprüche**

1. Sattelzug (1) aus Sattelzugmaschine (2) und aufgesatteltem Sattelanhänger, deren Fahrgestelle (2a, 3a) miteinander durch eine Sattelkupplung (4) verbunden und über eine Verriegelungsvorrichtung (8) gegen ein Schwenken um eine Vertikalachse verriegelbar sind, wobei zum Zusammenziehen der Fahrgestelle (2a, 3a) aus einer Normalposition für Straßenfahrt in eine verriegelbare, verkürzte Manövrierposition für Geländefahrt zumindest einer (4b) der Sattelkupplungsteile (4a, 4b) längsverschiebbar am zugehörigen Fahrgestell (3a) sitzt, dadurch gekennzeichnet daß der Anhänger (3) für seine Hinterachse (10b) eine in der Manövrierposition bei verriegelten Fahrgestellen (2a, 3a) betätigbare Lenkeinrichtung aufweist, wobei der vorzugsweise dem Anhänger (3) zugehörende verschiebbare Kupplungsteil (4b) auf einem über einen Stelltrieb (5) bewegbaren Kupplungsschlitten (7) angeordnet ist.

2. Sattelzug nach Anspruch 1, dadurch gekennzeichnet, daß der Anhänger (3) als Hinterachse eine Doppelachse (10) besitzt, von der die eine Achse (10b) lenkbar und die andere (10a) vorzugsweise entlastbar ist.

**Claims**

1. A tractor-semitrailer train (1) consisting of a semitrailer tractor (2) and a semitrailer having respective chassis (2a, 3a), which are interconnected by a fifth-wheel coupling (4) and are adapted to be interlocked by locking means (8) against a pivotal movement about a vertical axis, wherein at least one (4b) of the parts (4a, 4b) of the fifth-wheel coupling is longitudinally displaceably mounted on the associated chassis (3a) and the chassis (2a, 3a) are adapted to be pulled together from a normal position for road travel to an interlockable, shortened manoeuvring position for cross-country travel, characterized in that the trailer (3) is provided with means for steering its rear axle (10b), which steering means are operable in the manoeuvring position when the chassis (2a, 3a) are interlocked, and the displaceable coupling member (4b) preferably belongs to the trailer (3) and is mounted on a coupling slide (7), which is movable by an actuator (5).

2. A tractor-semitrailer train according to claim 1, characterized in that the trailer (3) has as its rear axle a twin axle (10), one axle (10b) of which is steerable and the other axle (10a) of which is preferably adapted to be relieved from load.

## Revendications

1. Ensemble routier à semi-remorque (1), compose d'un tracteur (2) et d'une semi-remorque (3) montés sur la sellette, et dont les châssis (2a, 3a) sont reliés l'un à l'autre par un attelage à sellette (4), et peuvent être verrouillés contre la rotation autour d'un axe vertical par un dispositif de verrouillage (8), cependant que, pour rapprocher les châssis (2a, 3a) pour passer d'une position normale, pour la circulation sur route, à une position de service qui est raccourcie et verrouillable, pour la circulation en tous terrains, au moins l'un (4b) des éléments (4a, 4b) de l'attelage à sellette est monté mobile en translation longitudinale sur le châssis (3a) correspondant, caractérisé en ce que la remorque (3) présente, pour son essieu arrière (10b), un dispositif de direction, qui peut être actionné dans la position de service dans laquelle les châssis (2a, 3a) sont verrouillés, cependant que la partie (4b) de l'attelage qui est mobile en translation, qui appartient de préférence à la remorque (3), est montée sur un chariot d'attelage (7) qui peut être déplacé au moyen d'un mécanisme de réglage (5).

2. Ensemble routier à semi-remorque selon la revendication 1, caractérisé en ce que la remorque (3) possède, comme essieu arrière, un essieu double (10), dont l'un des essieux (10b) est directeur, tandis que l'autre (10a) est, de préférence, déchargeable.

FIG.1

FIG.2

FIG.3

FIG.4

EP 0 208 825 B2

FIG.5

FIG.6

EP 0 208 825 B2